(19) Europäisches Patentamt
European Patent Office
Office européen des brevets

(11) Veröffentlichungsnummer : **0 114 148**
**B1**

(12) # EUROPÄISCHE PATENTSCHRIFT

(45) Veröffentlichungstag der Patentschrift : **07.09.88**

(21) Anmeldenummer : **84810007.9**

(22) Anmeldetag : **06.01.84**

(51) Int. Cl.⁴ : **C 07 F 7/08**, C 07 F 7/04, C 07 F 7/02, C 09 K 15/32, C 08 K 5/54

(54) **Dioxasilepin und Dioxasilocin Stabilisatoren.**

(30) Priorität : **12.01.83 US 457349**

(43) Veröffentlichungstag der Anmeldung : **25.07.84 Patentblatt 84/30**

(45) Bekanntmachung des Hinweises auf die Patenterteilung : **07.09.88 Patentblatt 88/36**

(84) Benannte Vertragsstaaten : **BE DE FR GB IT NL**

(56) Entgegenhaltungen :
**GB-A- 798 163**
**GB-A- 1 082 693**
**US-A- 2 963 502**
**US-A- 2 964 499**

(73) Patentinhaber : **CIBA-GEIGY AG**
**Klybeckstrasse 141**
**CH-4002 Basel (CH)**

(72) Erfinder : **Spivack, John D.**
**1 Blue Jay Street**
**Spring Valley New York 10977 (US)**
Erfinder : **Pastor, Stephen D.**
**112 Union Road**
**Spring Valley New York 10977 (US)**

**EP 0 114 148 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Organische polymere Materialien, wie Kunststoffe und Harze, sowie Schmier- und Mineralöle unterliegen thermischem, oxidativem und photoinduziertem Abbau. Eine grosse Anzahl unterschiedlicher Stabilisatoren ist in der Technik zur Stabilisierung verschiedener Substrate bekannt. Ihre Wirksamkeit wechselt je nach den Ursachen des Abbaus und dem stabilisierten Substrat. Im allgemeinen ist es schwierig, vorauszusagen, welche Stabilisatoren am wirksamsten und wirtschaflichsten für irgendein Anwendungsgebiet sein werden. Zum Beispiel kann die Stabilisator-Wirksamkeit bei der Reduzierung der Flüchtigkeit davon abhängen, ob die Bindungsspaltung im Substrat-Molekül verhindert wird. Um das Sprödewerden zu begrenzen und die Elastizität in einem Polymer oder Kautschuk aufrechtzuerhalten, kann es erforderlich sein, übermässige Vernetzung und/oder Kettenspaltungen zu verhindern. Um die Verfärbung zu verhüten, kann es notwendig sein, Reaktionen zu inhibieren, die neue Chromophore oder Farbkörper im Substrat oder Stabilisator hervorbringen. Probleme der Verfahrens-Stabilität und -Unvereinbarkeit müssen auch betrachtet werden.

Silane sind in einer Anzahl von Veröffentlichungen offenbart. Unsubstituierte Dibenzo [d, f] [1,3,2] dioxasilocin-Ringsysteme, das sind Biphenyl-Verbindungen ohne Substituenten an den Phenylringen, werden in GB 857 153, DE 1 057 129, Chemical Abstracts 62, 1683 (1965), Chemical Abstracts 56, 3336 (1955) und Roshdy et al., Z. Naturforsch. 18b, 1124 (1963) beschrieben. Diese Verbindungen sind für den Gebrauch als organische Zwischenprodukte und als Co-Monomere für wärmeresistente Kunststoffe offenbart worden. Roshdi gibt an, dass diese Verbindungen hitzestabil sind. Tetrakis(4-hydroxy-3,5-di-tert.-butylphenyl-alkoxy)-silane und ähnliche Derivate, die auf der Reaktion zwischen 2,6-Di-tert.-butylphenol und Silicontetrachlorid basieren, werden in Ershov et al., Izv. Akad. Nauk USSR, Ser. Khim 6, 14 (1972) und Gorodetskaya et al., International Polymer Science and Technology 6, No. 1, T54-T55 (1979) offenbart. Die Verbindungen sind als Wärmestabilisatoren für Polypropylen offenbart.

Es wurde nun gefunden, dass die sterisch gehinderten Silan-Derivate dieser Erfindung eine ungewöhnliche Kombination wünschenswerter Eigenschaften besitzen, die sie als Stabilisatoren besonders wirksam und brauchbar machen. Die Verbindungen sind insbesondere wirksam beim Schutz von Polyolefinen und Polyvinylchlorid.

Gegenstand dieser Erfindung ist es, eine Klasse sterisch gehinderter Silane zu liefern, die einen breiten Bereich verbesserter Leistung bei der Verarbeitungsstabilisierung aufweisen.

Verschiedene andere Ziele und Vorteile dieser Erfindung werden durch die folgende Beschreibung evident.

Die sterisch gehinderten Silane dieser Erfindung entsprechen der Formel

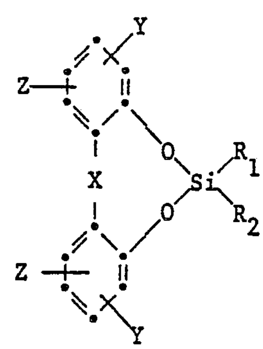

worin $R_1$ und $R_2$ unabhängig voneinander Wasserstoff, $C_1$-$C_4$ Alkyl oder Phenyl sind ; oder $R_1$ und $R_2$ zusammen bilden

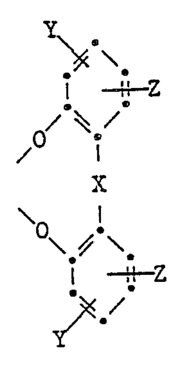

X ist eine direkte Bindung, $C_1$-$C_7$ Alkyliden oder Schwefel ;

Y ist $C_4$-$C_{12}$ Alkyl oder $C_7$-$C_{12}$ Alkaryl, und
Z ist Wasserstoff, $C_1$-$C_{12}$ Alkyl oder Phenyl.

Bevorzugte Verbindungen bezüglich der obigen Struktur sind jene, worin Y sich in der ortho-Position zum Silan-Sauerstoff in beiden Phenylringen befindet, und insbesondere solche, worin X $C_1$-$C_7$ Alkyliden oder Schwefel ist.

Die Y- und Z-Gruppen sind vorzugsweise geradkettiges oder verzweigtes $C_4$-$C_8$ Alkyl, wie n-Butyl, sec.-Butyl, tert.-Butyl, tert.-Pentyl, 2-Aethylhexyl, n-Octyl und tert.-Octyl. Besonders bevorzugt sind die Gruppen tert.-Butyl, tert.-Pentyl und tert.-Octyl. Besonders bevorzugt für die Z-Gruppe ist auch die para-Position zum Sauerstoff, insbesondere wenn Z tert.-Alkyl ist.

Unter tert.-Octyl versteht man 1,1,3,3-Tetramethylbutyl.

X ist vorzugsweise Niederalkyliden der Formel

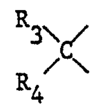

worin $R_3$ und $R_4$ unabhängig voneinander Wasserstoff oder $C_1$-$C_4$ Alkyl sind, vorausgesetzt dass die Zahl der C-Atome sieben nicht übersteigt ; insbesondere bevorzugt ist X Methylen, Aethyliden oder Prop-2-yliden.

Alkaryl-Substituenten sind im allgemeinen vom Tolyl, Mesityl und Xylyl abgeleitet.

Die erfindungsgemässen Silane können hergestellt werden, indem die geeignet substituierten Halogensilane mit einem alkylierten 2,2'-Biphenol oder einem alkylierten 2,2'-Alkyliden-bis-phenol gegebenenfalls in einem Lösungsmittel reagieren, um das gewünschte Produkt zu liefern. Das Lösungsmittel ist vorzugsweise ein Aromat, wie Benzol, Toluol, Xylol und dergleichen, oder ein heterocyclischer Aether, wie Tetrahydrofuran. Die Reaktionstemperatur liegt im Bereich von 0 °C bis Raumtemperatur. Die bevorzugte Methode, erfindungsgemässe Verbindungen herzustellen, schliesst die Reaktion der Halogensilane, hauptsächlich Dichlorsilan, mit dem geeigenten Phenol in Gegenwart eines Protonen-Akzeptors, wie einem tertiären Amin, z. B. Triäthylamin oder Pyridin, ein.

Die Ausgangsmaterialien, die notwendig sind, um diese gehinderten Silanverbindungen herzustellen, sind im Handel erhältlich oder können nach bekannten Methoden hergestellt werden.

Die Silan-Ausgangsmaterialien entsprechen der Formel

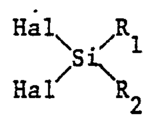

worin Hal Halogen bedeutet, vorzugsweise Chlor, und $R_1$ und $R_2$ die bereits gegebenen Definitionen haben, vorzugsweise Wasserstoff, Methyl oder Phenyl und ausserdem Halogen. Was das letztere angeht, wird das Tetrachlorsilan benutzt, um die symmetrische Bis(dibenzodioxa)-Verbindung herzustellen.

Die Phenol-Ausgangsmaterialien entsprechen der Formel

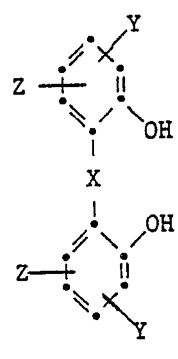

worin X, Y und Z die bereits gegebenen Definitionen aufweisen. Typische X-Vertreter schliessen eine direkte Bindung, Methylen, Aethyliden und Schwefel ein ; typische Y- und Z-Vertreter schliessen tert.-Butyl ein.

Die erfindungsgemässen Verbindungen sind wirksam bei der Stabilisierung organischer Materialien, wie Kunststoffe, Polymere und Harze.

Im allgemeinen schliessen Polymere, die stabilisiert werden können, die folgenden ein :

1. Monoolefin- und Diolefinpolymere, z. B. Polyäthylen (gegebenenfalls vernetzt), Polypropylen, Polyisobutylen, Polybuten-1, Polymethylpenten-1, Polyisopren oder Polybutadien, sowie Cycloolefinpolymere wie beispielsweise Cyclopenten oder Norbornen.

2. Gemische der unter 1) erwähnten Polymeren, z. B. Gemische von Polypropylen mit Polyäthylen oder Polyisobutylen.

3. Copolymere von Monoolefinen und Diolefinen miteinander oder mit anderen Vinylmonomeren, wie z. B. Aethylen/Propylen-, Propylen/Buten-1-, Propylen/Isobutylen-, Aethylen/Buten-1-, Propylen/Butadien-, Isobutylen/Isopren-, Aethylen/Aethylacrylat-, Aethylen/Alkylmethacrylate-, Aethylen/Vinylacetat- oder Aethylen/Acrylsäure-copolymere und deren Salze (Ionomere), sowie Terpolymere des Aethylens mit Propylen und einem Dien wie Hexadien, Dicyclopentadien oder Aethylidennorbornen.

4. Polystyrol.

5. Statistische Copolymere des Styrols oder α-Methylstyrols mit Dienen oder Acrylderivaten, wie z. B. Styrol/Butadien, Styrol/Acrylnitril, Styrol/Alkylmethacrylate oder Styrol/Acrylnitril/Methylacrylat ; hochschlagzähe Gemische aus Styrolcopolymeren und einem anderen Polymeren, wie beispielsweise einem Polyacrylat, Dienpolymer oder Aethylen/Propylen/Dienterpolymer ; sowie Blockcopolymere des Styrols, wie beispielsweise Styrol/Butadien/Styrol, Styrol/Isopren/Styrol, Styrol/Aethylen/Butylen/Styrol oder Styrol/Aethylen/Propylen/Styrol.

6. Pfropfcopolymere des Styrols, wie z. B. Styrol auf Polybutadien, Styrol und Acrylnitril auf Polybutadien, Styrol und Alkylacrylate oder -methacrylate auf Polybutadien, Styrol und Acrylnitril auf Aethylen/Propylen/Dienterpolymeren, Styrol und Acrylnitril auf Polyacrylaten, oder Polymethacrylaten, Styrol und Acrylnitril auf Acrylat/Butadiencopolymeren, sowie deren Gemische mit den unter 5) angeführten Copolymeren, beispielsweise die als ABS-, MBS-, ASA- oder AES-Polymere bekannten Copolymergemische.

7. Halogenhaltige Polymere wie Polychloropren, chlorierte Kautschuktypen, chloriertes oder sulfochloriertes Polyäthylen, Polymere aus halogenhaltigen Vinylverbindungen, wie beispielsweise Polyvinylchlorid, Polyvinylidenchlorid, Polyvinylfluorid, Polyvinylidenfluorid, sowie deren Copolymere, wie beispielsweise Vinylchlorid/Vinylidenchlorid-, Vinylchlorid/Vinylacetat- oder Vinylidenchlorid/Vinylacetatcopolymere.

8. Von α,β-ungesättigten Säuren und deren Derivaten abgeleitete Polymere wie Polyacrylate und Polymethacrylate, Polyacrylamide und Polyacrylnitril.

9. Copolymere der unter 8) erwähnten Monomeren miteinander oder mit anderen ungesättigten Monomeren, wie beispielsweise Acrylnitril/Butadien-, Acrylnitril/Alkylacrylat- oder Acrylnitril/Vinylchloridcopolymere oder Acrylnitril/Alkylmethacrylat/Butadienterpolymere.

10. Von ungesättigten Alkoholen und Aminen abgeleitete Polymere oder deren Acylderivate oder Acetale, wie Polyvinylalkohol, Polyvinylacetat, Polyvinylstearat, Polyvinylbenzoat, Polyvinylmaleinat, Polyvinylbutyral, Polyallylphthalat oder Polyallyl-melamin.

11. Homopolymere und Copolymere cyclischer Aether, wie Polyalkylenglykole, Polyäthylenoxyd, Polypropylenoxyd oder deren Copolymere mit Bis-glycidyläthern.

12. Polyacetale wie Polyoxymethylen und Aethylenoxid als Comonomer enthaltende Polyoxymethylene.

13. Polyphenylenoxide und -sulfide.

14. Von Polyäthern, Polyestern oder Polybutadienen abgeleitete Polyurethane mit Hydroxylendgruppen auf einer Seite und aliphatischen oder aromatischen Polyisocyanaten auf der anderen Seite, sowie deren Vorstufen.

15. Von Diaminen und Dicarbonsäuren und/oder Aminocarbonsäuren oder den entsprechenden Lactamen abgeleitete Polyamide und Copolyamide, wie Polyamid-4, Polyamid-6, Polyamid-6/6, Polyamid-6/10, Polyamid-11, Polyamid-12, Poly-2,4,4-trimethylhexamethylen-terephthalamid oder Poly-m-phenylenisophthalamid, sowie deren Copolymere mit Polyäthern, wie beispielsweise mit Polyäthylenglykol, Polypropylenglykol oder Polytetramethylenglykolen.

16. Polyharnstoffe, Polyimide und Polyamid-imide.

17. Von Dicarbonsäuren und Glykolen und/oder Hydroxycarbonsäuren oder den entsprechenden Lactonen abgeleitete Polyester, wie Polyäthylenterephthalat, Polybutylenterephthalat, Poly-1,4-dimethylolcyclohexanterephthalat und Polyhydroxybenzoate, sowie von Polyäthern mit Hydroxylendgruppen abgeleitete Blockcopolyäther-ester.

18. Polycarbonate.

19. Polysulfone und Polyäthersulfone.

20. Von Aldehyden einerseits und Phenolen, Harnstoffen und Melaminen andererseits abgeleitete, vernetzte Polymere, wie Phenol/Formaldehyd-, Harnstoff/Formaldehyd- und Melamin/Formaldehydharze.

21. Trocknende und nicht-trocknende Alkydharze.

22. Von Copolyestern gesättigter und ungesättigter Dicarbonsäuren mit mehrwertigen Alkoholen und Vinylverbindungen als Vernetzungsmittel abgeleitete ungesättigte Polyesterharze sowie deren schwerentflammbare, halogenhaltige Modifikationen.

23. Von substituierten Acrylestern abgeleitete heisshärtende Acrylharze, wie Epoxy-acrylate, Urethanacrylate oder Polyester-acrylate.

24. Alkydharze, Polyesterharze oder Acrylatharze im Gemisch mit Melaminharzen, Harnstoffharzen, Polyisocyanaten oder Epoxidharzen als Vernetzungsmittel.

25. Von Polyepoxiden, z. B. Bis-glycidyläthern oder cycloaliphatischen und aromatischen Diepoxiden

abgeleitete vernetzte Epoxidharze.

26. Natürliche Polymere, wie Cellulose, Kautschuk, Gelatine und deren polymerhomolog chemisch abgewandelte Derivate, wie Celluloseacetate, Cellulosepropionate und Cellulosebutyrate, oder Celluloseäther wie Methylcellulose.

27. Natürlich vorkommende und synthetische organische Materialien, die reine monomere Verbindungen oder Gemische solcher Verbindungen darstellen, beispielsweise Mineralöle, tierische und pflanzliche Fette, Oele und Wachse, oder Oele, Fette und Wachse auf Grundlage synthetischer Ester (z. B. Phthalate, Adipate, Phosphate oder Trimellithate), sowie Gemische synthetischer Ester mit Mineralölen in beliebigen Gewichtsverhältnissen, wobei diese Materialien als Weichmacher für Polymere oder als Textilspinnöle verwendbar sind, sowie wässrige Emulsionen solcher Materialien.

28. Wässrige Emulsionen von Natur- oder Synthesekautschuk, z. B. natürlicher Latex, oder ein Latex aus carboxylierten Styrol/Butadiencopolymeren.

Im allgemeinen setzt man etwa 0,01 bis etwa 5 Gew.-% der erfindungsgemässen Stabilisatoren ein, bezogen auf die stabilisierte Zusammensetzung, doch hängt dies jeweils vom Substrat und der Anwendung ab. Ein bevorzugter Bereich erstreckt sich von etwa 0,05 bis zu etwa 2 Gew.-% und insbesondere 0,1 bis etwa 1 Gew.-%.

Die erfindungsgemässen Stabilisatoren lassen sich nach herkömmlichen Methoden in jeder zweckmässigen Stufe vor der Herstellung von Formteilen daraus in die organischen Polymeren einarbeiten. Beispielsweise kann man den Stabilisator mit dem Polymer in trockener Pulverform oder eine Suspension oder Emulsion des Stabilisators mit einer Lösung, Suspension oder Emulsion des Polymeren vermischen. Die erfindungsgemässen stabilisierten Polymerzusammensetzungen können gegebenenfalls verschiedene weitere herkömmliche Zusatzstoffe enthalten, wie die folgenden :

1. Antioxidantien

1.1 Einfache 2,6-Dialkylphenole, wie beispielsweise 2,6-Di-tert.-butyl-4-methylphenol, 2-tert.-Butyl-4,6-dimethylphenol, 2,6-Di-tert.-butyl-4-methoxymethylphenol und 2,6-Di-octadecyl-4-methylphenol.

1.2 Derivate von alkylierten Hydrochinonen, wie beispielsweise 2,5-Di-tert.-butyl-hydrochinon, 2,5-Di-tert.-amyl-hydrochinon, 2,6-Di-tert.-butyl-hydrochinon, 2,5-Di-tert.-butyl-4-hydroxy-anisol, 3,5-Di-tert.-butyl-4 hydroxy-anisol, Tris-(3,5-di-tert.-butyl-4-hydroxyphenyl)-phosphit, 3,5-Di-tert.-butyl-4-hydroxyphenyl-stearat und Bis-(3,5-di-tert.-butyl-4-hydroxyphenyl)-adipat.

1.3 Hydroxylierte Thiodiphenyläther, wie beispielsweise 2,2'-Thio-bis-(6-tert.-butyl-4-methylphenol), 2,2'-Thio-bis-(4-octylphenol), 4,4'-Thio-bis-(6-tert.-butyl-3-methylphenol), 4,4'-Thio-bis-(3,6-di-sek.-amylphenol), 4,4'-Thio-bis-(6-tert.-butyl-2-methylphenol) und 4,4'-Bis-(2,6-Dimethyl-4-hydroxy-phenyl)-disulfid.

1.4 Alkyliden-bisphenole, wie beispielsweise 2,2'-Methylen-bis-(6-tert.-butyl-4-methylphenol), 2,2'-Methylen-bis-(6-tert.-butyl-4-äthylphenol), 4,4'-Methylen-bis-(6-tert.-butyl-2-methylphenol), 4,4'-Methylen-bis-(2,6-di-tert.-butyl-phenol), 2,6-Di-(3-tert.-butyl-5-methyl-2-hydroxybenzyl)-4-methyl-phenol, 2,2'-Methylen-bis-[4-methyl-6-(α-methylcyclohexyl)-phenol], 1,1'-Bis-(3,5-dimethyl-2-hydroxyphenyl)-butan, 1,1-Bis-(5-tert.-butyl-4-hydroxy-2-methylphenyl)-butan, 2,2-Bis-(3,5-di-tert.-butyl-4-hydroxyphenyl)-propan, 1,1,3-Tris-(5-tert.-butyl-4-hydroxy-2-methylphenyl)-butan, 2,2-Bis-(5-tert.-butyl-4-hydroxy-2-methylphenyl)-4-n-dodecylmerkapto-butan, 1,1,5,5-Tetra-(5-tert.-butyl-4-hydroxy-2-methylphenyl)-pentan und Aethylenglykol-bis-[3,3-bis-(3'-tert.-butyl-4'-hydroxyphenyl)-butyrat].

1.5 O-, N- und S-Benzylverbindungen, wie beispielsweise 3,3', 5,5'-Tetra-tert.-butyl-4,4'-dihydroxydibenzyläther, Octadecyl-4-hydroxy-3,5-dimethylbenzyl-merkaptoacetat, Tris-(3,5-di-tert.-butyl-4-hydroxybenzyl)-amin und Bis-(4-tert.-butyl-3-hydroxy-2,6-dimethylbenzyl)-dithioterephthalat.

1.6 Hydroxybenzylierte Malonate, wie beispielsweise Dioctadecyl-2,2-bis-(3,5-di-tert.-butyl-2-hydroxy-benzyl)-malonat, Dioctadecyl-2-(3-tert.-butyl-4-hydroxy-5-methylbenzyl)-malonat, Didodecylmerkaptoäthyl-2,2-bis-(3,5-di-tert.-butyl-4-hydroxybenzyl)-malonat und Di-[4-(1,1,3,3-tetramethylbutyl)-phenyl]-2,2-bis-(3,5-di-tert.-butyl-4-hydroxybenzyl)-malonat.

1.7 Hydroxybenzyl-aromatische Verbindungen, wie beispielsweise 1,3,5-Tris-(3,5-di-tert.-butyl-4-hydroxybenzyl)-2,4,6-trimethylbenzol, 1,4-Di-(3,5-di-tert.-butyl-4-hydroxybenzyl)-2,3,5,6-tetramethylbenzol und 2,4,6-Tris-(3,5-di-tert.-butyl-4-hydroxybenzyl)-phenol.

1.8 s-Triazinverbindungen wie beispielsweise 2,4-Bis-octylmerkapto-6-(3,5-di-tert.-butyl-4-hydroxyanilino)-s-triazin, 2-Octylmerkapto-4,6-bis-(3,5-di-tert.-butyl-4-hydroxyanilino)-s-triazin, 2-octylmerkapto-4,6-bis-(3,5-di-tert.-butyl-4-hydroxyphenoxy)-s-triazin, 2,4,6-Tris-(3,5-di-tert.-butyl-4-hydroxyphenoxy)-s-triazin, 2,4,6-Tris-(3,5-di-tert.-butyl-4-hydroxyphenyläthyl)-s-triazin und 1,3,5-Tris-(3,5-di-tert.-butyl-4-hydroxybenzyl)-isocyanurat.

1.9 Amide der β-(3,5-Di-tert.-butyl-4-hydroxyphenyl)-propionsäure, wie beispielsweise 1,3,5-Tris-(3,5-di-tert.-butyl-4-hydroxyphenylpropionyl)-hexahydro-s-triazin und N,N'-Di-(3,5-di-tert.-butyl-4-hydroxyphenyl-propionyl)-hexamethylendiamin und N,N'-Bis-β-(3,5-di-t-butyl-4-hydroxyphenyl)-propionyl-hydrazin.

1.10 Ester der β-(3,5-Di-tert.-butyl-4-hydroxyphenyl)-propionsäure mit einwertigen oder mehrwertigen Alkoholen, wie beispielsweise Methanol, Aethanol, Octadecanol, 1,6-Hexandiol, 1,9-Nonandiol, Aethylenglykol, 1,2-Propandiol, Diäthylenglykol, Thiodiäthylenglykol, Neopentylglykol, Pentaerythrit, 3-Thia-undecanol, 3-Thia-pentadecanol, Trimethylhexandiol, Trimethyloläthan, Trimethylolpropan, Tris-hydroxyäthyl-isocyanurat und 4-Hydroxymethyl-1-phospha-2,6,7-trioxabicyclo [2.2.2] octan.

1.11 Ester der β-(5-tert.-Butyl-4-hydroxy-3-methylphenyl)-propionsäure mit einwertigen oder mehrwertigen Alkoholen wie beispielsweise Methanol, Aethanol, Octadecanol, 1,6-Hexandiol, 1,9-Nonandiol, Aethylenglykol, 1,2-Propandiol, Diäthylenglykol, Triäthylenglykol, Thiodiäthylenglykol, Neopentylglykol, Pentaerythrit, 3-Thia-undecanol, 3-Thia-pentadecanol, Trimethylhexandiol, Trimethyloläthan, Trimethylolpropan, Tris-hydroxyäthyl-isocyanurat und 4-Hydroxymethyl-1-phospha-2,6,7-trioxabicyclo [2.2.2] octan.

1.12 Ester der 3,5-Di-tert.-butyl-4-hydroxy-phenylessigsäure mit einwertigen oder mehrwertigen Alkoholen, wie beispielsweise Methanol, Aethanol, Octadecanol, 1,6-Hexandiol, 1,9-Nonandiol, Aethylenglykol, 1,2-Propandiol, Diäthylenglykol, Thiodiglykol, Neopentylglykol, Pentaerythrit, 3-Thia-undecanol, 3-Thia-pentadecanol, Trimethylhexandiol, Trimethyloläthan, Trimethylolpropan, Tris-hydroxyäthyl-isocyanurat und 4-Hydroxymethyl-1-phospha-2,6,7-trioxabicyclo [2.2.2]-octan, insbesondere der Tetra-bisester des Pentaerythrits.

1.13 Benzylphosphonate, wie beispielsweise Dimethyl-3,5-di-tert.-butyl-4-hydroxybenzylphosphonat, Diäthyl-3,5-di-tert.-butyl-4-hydroxybenzylphosphonat, Dioctadecyl-3,5-di-tert.-butyl-4-hydroxybenzylphosphonat und Dioctadecyl-5-tert.-butyl-4-hydroxy-3-methylbenzylphosphonat.

Die folgenden seien als Beispiele für weitere, zusammen mit dem erfindungsgemässen Stabilisator und dem Antioxidans verwendbare Zusatzstoffe genannt :

1. Aminoarylderivate, z. B. Phenyl-1-naphthylamin, Phenyl-2-naphthylamin, N,N'-Di-phenyl-p-phenylendiamin, N,N'-Di-1-naphthyl-p-phenylendiamin, N,N'-Di-2-naphthyl-p-phenylendiamin, N,N'-Di-sek.-butyl-p-phenylen-diamin, 6-Aethoxy-2,2,4-trimethyl-1,2-dihydrochinolin, 6-Dodecyl-2,2,4-trimethyl-1,2-dihydrochinolin, Mono- und Dioctyliminodibenzyl, polymerisiertes 2,2,4-Trimethyl-1,2-dihydrochinolin, octyliertes Diphenylamin, nonyliertes Diphenylamin, N-Phenyl-N'-cyclohexyl-p-phenylendiamin, N-Phenyl-N'-isopropyl-p-phenylendiamin, N,N'-Di-sek.-octyl-p-phenylendiamin, N,N'-Di(1,4-dimethylpentyl)-p-phenylendiamin, N,,N'-Dimethyl-N,N'-di-(sek.-octyl)-p-phenylendiamin, 2,6-Dimethyl-4-methoxyanilin, 4-Aethoxy-N-sek.-butylanilin, ein Diphenylamin/Acetonkondensationsprodukt, Aldol-1-naphthylamin und Phenothiazin.

Bei Verwendung der obigen Antioxidantien sind Verfärbungseffekte zu berücksichtigen.

2. UV-Absorber und Lichtschutzmittel

2.1 2-(2'-Hydroxyphenyl)-benztriazole, z. B. das 5'-Methyl-, 3',5'-Di-tert.-butyl-, 5'-tert.-Butyl-, 5'-(1,1,3,3-Tetramethylbutyl)-, 5-Chlor-3',5'-di-tert.-butyl-, 5-Chlor-3'-tert.-butyl-5'-methyl-, 3'-sek.-Butyl-5'-tert.-butyl-, 3'-α-Methylbenzyl-5'-methyl-, 3'-α-Methylbenzyl-5'-methyl-5-chlor-, 4'-Hydroxy-, 4'-Methoxy-, 4'-Octoxy-, 3',5'-Di-tert.-amyl-, 3'-Methyl-5'-carbomethoxyäthyl-, 3',5'-Bis(α,α-dimethyl-benzyl)-5-chloro, 3',5'-Di-tert.-octylphenyl, 3',5'-Di-tert.-octylphenyl-5-chloro- und 5-Chloro-3',5'-di-tert.-amyl-Derivate.

2.2 2,4-Bis-(2'-hydroxyphenyl)-6-alkyl-s-triazine, z. B. das 6-Aethyl-, 6-Heptadecyl- oder 6-Undecylderivat.

2.3 2-Hydroxybenzophenone, z. B. das 4-Hydroxy-, 4-Methoxy-, 4-Octoxy-, 4-Decyloxy-, 4-Dodecyloxy-, 4-Benzyloxy-, 2',4,4'-Trihydroxy- oder 2'-Hydroxy-4,4'-dimethoxyderivat.

2.4 1,3-Bis-(2'-hydroxybenzoyl)-benzole, z. B. 1,3-Bis-(2'-hydroxy-4'-hexyloxy-benzoyl)-benzol, 1,3-Bis-(2'-hydroxy-4'-octyloxy-benzoyl)-benzol oder 1,3-Bis-(2'-hydroxy-4'-dodecyloxy-benzoyl)-benzol.

2.5 Ester gegebenenfalls substituierter Benzoesäuren, z. B. Phenylsalicylat, Octylphenylsalicylat, Dibenzoylresorcin, Bis-(4-tert.-butylbenzoyl)-resorcin, Benzoylresorcin, 3,5-Di-tert.-butyl-4-hydroxybenzoesäure-2,4-di-tert.-butylphenylester oder -octadecylester oder -2-methyl-4,6-di-tert.-butylester.

2.6 Acrylate, z. B. α-Cyan-β,β-diphenyl-acrylsäureäthylester oder -isooctylester, -Carbomethoxyzimtsäuremethylester, α-Cyan-β-methyl-p-methoxyzimtsäuremethylester oder -butylester oder N-(β-Carbomethoxyvinyl)-2-methyl-indolin.

2.7 Sterisch gehinderte Amine, z. B. 4-Benzoyl-2,2,6,6-tetramethylpiperidin, 4-Stearyloxy-2,2,6,6-tetramethylpiperidin, Bis-(2,2,6,6-tetramethyl-piperidyl)-sebacinat oder 3-n-Octyl-7,7,9,9-tetramethyl-1,3,8-triazaspiro [4,5] decan-2,4-dion.

2.8 Oxalsäurediamide, z. B. 4,4'-Di-octyloxyoxanilid, 2,2'-Di-dodecyloxy-5,5'-di-tert.-butyl-oxanilid, 2-Aethoxy-2'-äthyl-oxanilid, N,N'-Bis-(3-dimethylaminopropyl)-oxalamid, 2-Aethoxy-5-tert.-butyl-2'-äthyloxanilid und dessen Gemisch mit 2-Aethoxy-2'-äthyl-4,5'-di-tert.-butyl-oxanilid und dessen Gemisch mit 2-Aethoxy-2'-äthyl-4,5'-di-tert.-butyl-oxanilid oder Gemische von ortho- und paramethoxy- sowie o- und p-äthoxy-disubstituierten Oxaniliden.

3. Metalldesaktivatoren, z. B. Oxanilid, Isophthalsäuredihydrazid, Sebacinsäure-bis-phenylhydrazid, Bis-benzyliden-oxalsäuredihydrazid, N,N'-Diacetaladipinsäuredihydrazid, N,N'-Bis-salicyloyl-oxalsäuredihydrazid, N,N'-Bis-salicyloylhydrazin, N,N'-Bis-(3,5-di-tert.-butyl-4-hydroxyphenylpropionyl)-hydrazin, N-Salicyloyl-N'-salicylal-hydrazin, 3-Salicyloyl-amino-1,2,4-triazol oder N,N'-Bis-salicyloylthiopropionsäuredihydrazid.

4. Basische Costabilisatoren, z. B. Alkali- und Erdalkalisalze höherer Fettsäuren, beispielsweise Ca-Stearat, Zn-Stearat, Mg-Behenat, Na-Ricinoleat oder K-Palmitat.

5. Keimbildungsmittel, z. B. 4-tert.-Butylbenzoesäure, Adipinsäure oder Diphenylessigsäure.

6. Phosphite, wie z. B. Triphenyl-phosphit, Diphenylalkyl-phosphite, Phenyldialkyl-phosphite, Tri-(nonylphenyl)-phosphit, Trilauryl-phosphit, Trioctadecyl-phosphit, 3,9-Isodecyloxy-2,4,8,10-tetraoxa-3,9-diphosphaspiro[5,5] undecan und Tri-(4-hydroxy-3,5-di-tert.-butylphenyl)-phosphit.

Weitere Zusatzstoffe, die in die stabilisierten Zusammensetzungen eingearbeitet werden können, sind Thiosynergisten, wie Dilaurylthiodipropionat oder Distearylthiodipropionat, Schmiermittel, wie Stearylalkohol, Füllstoffe, Russ, Asbest, Kaolin, Talkum, Glasfasern, Pigmente, optische Aufheller, Flammschutzmittel und Antistatika.

Die erfindungsgemässen Verbindungen lassen sich für sich allein als einziger Stabilisator mit hauptsächlich einer Antioxidansfunktion oder einer lichtstabilisierenden Funktion anwenden, oder der Stabilisator kann als Antioxidans und Lichtstabilisator nützlich sein. Man kann die Stabilisatoren mit phenolischen Antioxidantien, Gleitmitteln, wie Calciumstearat, Pigmenten, Färbemitteln oder Farbstoffen, UV-Absorbern, Lichtstabilisatoren, wie sterisch gehinderten Aminen, Metalldesaktivatoren, Talkum und sonstigen Füllstoffen usw. verwenden.

Die nachfolgenden Beispiele erläutern ferner bevorzugte Ausführungsformen dieser Erfindung. Dabei sind Teile stets Gewichtsteile, falls nicht anders angegeben.

Beispiel 1 : 2,4,8,10-Tetra-t-butyl-6-methyl-dibenzo[d, f] [1,3,2]-dioxasilepin

In einem mit einer Flamme getrockneten Kolben unter trockener Stickstoffatmosphäre wird eine gerührte Lösung aus 23,0 g (0,20 Mol) Dichlormethylsilan in 200 ml Toluol langsam mit einer Lösung aus 82,1 g (0,20 Mol) 3,3',5,5'-Tetra-tert.-butyl-biphenyl-2,2'-diol und 40,5 g (0,40 Mol) Triäthylamin in 250 ml Toluol bei 5-10 °C behandelt. Die Reaktionsmischung wird 12 Stunden bei Raumtemperatur nach der Zugabe gerührt, wird dann filtriert, um das Triäthylaminhydrochlorid zu beseitigen, und das Lösungsmittel wird danach im Vakuum abgezogen. Der Rückstand wird aus Acetonitril-Toluol umkristallisiert, was zu 69,4 g (77 %) weisser Kristalle mit dem Schmelzpunkt 191-198 °C führt.

Analyse berechnet für $C_{29}H_{44}O_2Si$ : C 76,9 H 9,8
Gefunden : C 77,0 H 9,8

Beispiel 2 : 2,4,8,10-Tetra-t-butyl-6,6-dimethyl-dibenzo-[d,f] [1,3,2]-dioxasilepin

Wenn das Verfahren aus Beispiel 1 angewendet wird, wird diese Verbindung aus 25,8 g (0,20 Mol) Dichlordimethylsilan, 82,1 g (0,20 Mol) 3,3',5,5'-Tetra-tert.-butyl-biphenyl-2,2'-diol und 40,5 g (0,40 Mol) Triäthylamin hergestellt. Die Umkristallisierung aus 2-Butanon liefert 43,7 g (47 %) eines weissen Pulvers mit einem Schmelzpunkt von 170-176 °C.

Analyse berechnet für $C_{30}H_{46}O_2Si$ : C 77,2 H 9,9
Gefunden : C 77,4 H 10,0

Beispiel 3 : 2,4,8,10-Tetra-t-butyl-6-methyl-12H-dibenzo [d,g] [1,3,2]-dioxasilocin

Wenn das Verfahren aus Beispiel 1 angewendet wird, wird diese Verbindung aus 23,0 g (0,20 Mol) Dichlormethylsilan, 84,9 g (0,20 Mol) 2,2'-Methylen-bis(4-di-t-butylphenol) und 40,5 g (0,40 Mol) Triäthylamin hergestellt. Die zweimalige Umkristallisierung aus Acetonitril-Toluol liefert 15,5 g (17 %) weisses Pulver mit einem Schmelzpunkt von 230-231 °C.

Analyse berechnet für $C_{30}H_{46}O_2Si$ : C 77,2 H 9,9
Gefunden : C 77,2 H 9,7

Beispiel 4 : 2,4,8,10-Tetra-t-butyl-6-phenyl-12H-dibenzo [d,g] [1,3,2]-dioxasilocin

Wenn das Verfahren aus Beispiel 1 benutzt wird, wird diese Verbindung aus 17,7 g (0,1 Mol) Dichlorphenylsilan, 42,5 g (0,1 Mol) 2,2'-Methylen-bis(4,6-di-t-butylphenol) und 20,2 g (0,2 Mol) Triäthylamin hergestellt. Die zweimalige Umkristallisierung aus Acetonitril-Toluol führt zu 34,0 g (64 % Ausbeute) Produkt in Form eines grauweissen Pulvers mit einem Schmelzpunkt von 153-156 °C ; IR : 2 200 $cm^{-1}$ SiH.

Analyse berechnet für $C_{35}H_{48}O_2Si$ : C 79,5 H 9,2
Gefunden : C 79,9 H 9,0

Beispiel 5 : 2,4,8,10-Tetra-t-butyl-6,6,12-trimethyl-12H-dibenzo-[d,g] [1,3,2] dioxasilocin

Wenn das Verfahren aus Beispiel 1 benutzt wird, wird diese Verbindung aus 25,8 g (0,20 Mol) Dichlordimethylsilan, 87,7 g (0,20 Mol) 2,2'-Aethyliden-bis(4,6-di-t-butylphenol) und 40,5 g (0,40 Mol)

Triäthylamin hergestellt. Die Umkristallisierung aus Acetonitril-Toluol ergibt 77 g (79 % Ausbeute) Produkt in Form von weissen Nadeln mit einem Schmelzpunkt von 171-177 °C.

Analyse berechnet für $C_{32}H_{50}O_2Si$ : C 77,0 H 10,2
Gefunden : C 77,5 H 9,9

Beispiel 6 : 2,4,8,10-Tetra-t-butyl-6,12-dimethyl-12H-dibenzo-[d,g] [1,3,2] dioxasilocin

Wenn das Verfahren aus Beispiel 1 angewendet wird, wird diese Verbindung aus 23,0 g (0,20 Mol) Dichlormethylsilan, 87,7 g (0,20 Mol) 2,2'-Aethyliden-bis(4,6-di-t-butylphenol) und 40,5 g (0,40 Mol) Triäthylamin hergestellt. Die zweimalige Umkristallisierung aus Acetonitril-Toluol liefert 49,0 g (51 % Ausbeute) weisser Kristalle mit einem Schmelzpunkt von 189-194 °C.

Analyse berechnet für $C_{31}H_{48}O_2Si$ : C 77,4 H 10,1
Gefunden : C 77,1 H 9,9

Beispiel 7 : 2,4,8,10-Tetra-t-butyl-6-methyl-dibenzo [d,g] [1,3,2,6]-dioxasilathiocin

Wenn das Verfahren aus Beispiel 1 benutzt wird, wird diese Verbindung aus 5,7 g (0,05 Mol) Dichlormethylsilan, 22,1 g (0,05 Mol) 2,2'-Thio-bis(4,6-di-t-butylphenol) und 10,1 g (0,10 Mol) Triäthylamin hergestellt. Die zweimalige Umkristallisierung aus Aceton-Toluol ergibt 11,8 g (48 % Ausbeute) weisser Kristalle mit einem Schmelzpunkt von 178-180 °C.

Analyse berechnet für $C_{29}H_{44}O_2Si$ : C 71,9 H 9,2
Gefunden : C 71,7 H 9,2

Beispiel 8 : 2,4,8,10-Tetra-t-butyl-6-phenyl-dibenzo [d,g] [1,3,2,6]-dioxasilathiocin

Wenn das Verfahren aus Beispiel 1 Anwendung findet, wird diese Verbindung aus 5,3 g (0,03 Mol) Dichlorphenylsilan, 13,3 g (0,03 Mol) 2,2'-Thio-bis(4,6-di-t-butylphenol) und 6,1 g (0,06 Mol) Triäthylamin hergestellt. Die Umkristallisierung aus Aceton liefert 6,7 g (41 % Ausbeute) weissen Festkörper mit einem Schmelzpunkt von 175-177 °C.

Analyse berechnet für $C_{34}H_{46}O_2Si$ : C 74,7 H 8,5
Gefunden : C 74,9 H 8,6

Beispiel 9 : 2,4,8,10-Tetra-t-butyl-12H-dibenzo [d,g] [1,3,2]-dioxasilocin

In einem mit einer Flamme getrockneten Kolben, versehen mit einem Trockeneis-Aceton gefüllten Dewar-Kühlgefäss und einem gesinterten Glaseinlass, werden 42,5 g (0,1 Mol) 2,2'-Methylen-bis(4,6-di-t-butylphenol) und 20,2 g (0,2 Mol) Triäthylamin, gelöst in 100 ml Tetrahydrofuran, langsam mit 11,1 g (0,11 Mol) Dichlorsilan behandelt. Filtration und Umkristallisieren aus Acetonitril-Toluol führen zu 25,9 g (57 % Ausbeute) eines weissen Festkörpers mit einem Schmelzpunkt von 189-192 °C. Das $^1H$-NMR-Spektrum ist mit dem Produkt konsistent.

Beispiel 10

Unstabilisiertes Polypropylen-Pulver (Herkules Profax 6501) wird gründlich mit 0,3 Gew.-% des Additivs gemischt. Die gemischten Materialien werden dann in einer Zwei-Walzen-Mühle bei 182 °C fünf Minuten lang gewalzt und in Blattform von der Mühle ausgestossen, um dann abkühlen zu können. Das stabilisierte Polypropylen wird darauf in Stücke geschnitten und in einer hydraulischen Presse bei 220 °C und 1,2 × 0,06 Pa (175 p.s.i.) in 0,635 mm (25 mil) dicke Stücke druckgeformt. Die Probestücke werden in einer Fluoreszenz-Sonnenlicht/Schwarzlicht-Kammer (fluorescent sunlight/black light chamber) belichtet und auf Defekte beobachtet. Für die auftretenden Defekte werden die Stunden bestimmt, die erforderlich sind, um eine Carbonyl-Absorption von 0,5 durch IR-Spektroskopie auf den belichteten Filmen zu erreichen.

| Additiv | Anzahl der Stunden, bis Defekte bei den bestrahlten Proben auftreten (Std.) |
|---|---|
| ohne | 50-100 |
| Beispiel 1 | 280 |
| Beispiel 2 | 270 |
| Beispiel 3 | 340 |
| Beispiel 4 | 400 |
| Beispiel 5 | 360 |
| Beispiel 6 | 350 |
| Beispiel 7 | 470 |
| Beispiel 8 | 450 |
| Beispiel 9 | 770 |

Beispiel 11

Die folgende Polyvinylchlorid-Formulierung wird hergestellt :

| | Teile |
|---|---|
| Polyvinylchlorid | 100.0 |
| Epoxidiertes Sojabohnenöl | 4.0 |
| Calciumstearat | 0.35 |
| Zinkstearat | 0.15 |
| Schmierstoff | 0.7 |
| Fliessmodifikator | 0.5 |
| Schlagzähigkeitsmodifikator | 8.0 |
| Phenyl-di-dodecyl-phosphit | 0.3 |
| Verbindung aus Beispiel 1 | 0.6 |

Es werden durch Druck geformte Test-Plättchen hergestellt, die bei 125 °C ofengealtert werden. Die stabilisierten Plättchen weisen verbesserte Farben gegenüber der Kontroll-Polyvinylchlorid-Formulierung auf, d. h. der Formulierung ohne Stabilisator.

Zusammenfassend kann festgestellt werden, dass diese Erfindung neue sterisch gehinderte Silanverbindungen liefert, die eine effektive Stabilisierungsaktivität zeigen.

**Patentansprüche**

1. Eine Verbindung der Formel

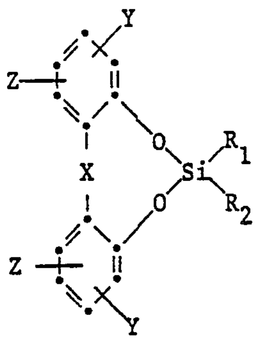

worin $R_1$ und $R_2$ unabhängig voneinander Wasserstoff, $C_1$-$C_4$ Alkyl oder Phenyl sind ; oder $R_1$ und $R_2$ zusammen bilden

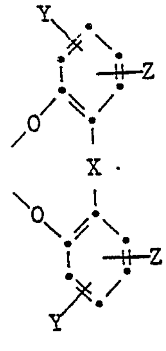

X ist eine direkte Bindung, $C_1$-$C_7$ Alkyliden oder Schwefel
Y ist $C_4$-$C_{12}$ Alkyl oder $C_7$-$C_{12}$ Alkaryl und
Z ist Wasserstoff, $C_1$-$C_{12}$ Alkyl oder Phenyl.

2. Verbindung gemäss Anspruch 1, dadurch gekennzeichnet, dass Y in der ortho-Position zum Silan-Sauerstoff in beiden Phenylringen ist.

3. Verbindung gemäss Anspruch 2, dadurch gekennzeichnet, dass Y $C_4$-$C_8$ Alkyl ist.

4 Verbindung gemäss Anspruch 3, dadurch gekennzeichnet, dass Y tert.-Butyl ist.

5. Verbindung gemäss Anspruch 2, dadurch gekennzeichnet, dass Z tert.-Alkyl mit 4-8 C-Atomen bedeutet und sich in para-Position zum Silan-Sauerstoff in beiden Phenylringen befindet.

6. Verbindung gemäss Anspruch 2, dadurch gekennzeichnet, dass X $C_1$-$C_7$ Alkyliden oder Schwefel ist.

7. Verbindung gemäss Anspruch 6, dadurch gekennzeichnet, dass X Alkyliden der Formel

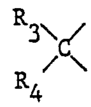

ist, worin $R_3$ und $R_4$ unabhängig voneinander Wasserstoff oder $C_1$-$C_4$ Alkyl sind, vorausgesetzt, dass die Zahl der C-Atome sieben nicht übersteigt.

8. Eine Verbindung gemäss Anspruch 2, ausgewählt aus der Gruppe, bestehend aus :
2,4,8,10-Tetra-t-butyl-6-methyl-dibenzo [d,f] [1,3,2]-dioxasilepin,
2,4,8,10-Tetra-t-butyl-6,6-dimethyl-dibenzo [d,f] [1,3,2] dioxasilepin,
2,4,8,10-Tetra-t-butyl-6-methyl-12H-dibenzo [d,g] [1,3,2] dioxasilocin,
2,4,8,10-Tetra-t-butyl-6-phenyl-12H-dibenzo [d,g] [1,3,2] dioxasilocin,
2,4,8,10-Tetra-t-butyl-6,6-12-trimethyl-12H-dibenzo [d,g] [1,3,2]-dioxasilocin,
2,4,8,10-Tetra-t-butyl-6,12-dimethyl-12H-dibenzo [d,g] [1,3,2] dioxasilocin,
2,4,8,10-Tetra-t-butyl-6-methyl-dibenzo [d,g] [1,3,2,6] dioxasilathiocin,
2,4,8,10-Tetra-t-butyl-6-phenyl-dibenzo [d,g] [1,3,2,6] dioxasilathiocin,
2,4,8,10-Tetra-t-butyl-12H-dibenzo [d,g] [1,3,2] dioxasilocin.

9. Stoffzusammensetzungen, dadurch gekennzeichnet, dass sie organisches Material, das oxidativem, thermischem und aktinischem Abbau unterliegt, enthalten, und mit einer zur Stabilisierung wirksamen Menge einer Verbindung nach Anspruch 1 stabilisiert sind.

10. Zusammensetzungen gemäss Anspruch 9, dadurch gekennzeichnet, dass das organische Material ein synthetisches Polymer ist.

11. Ein Verfahren zur Stabilisierung von organischem Material gegen oxidativen, thermischen und aktinischen Abbau, dadurch gekennzeichnet, dass man eine wirksame stabilisierende Menge einer Verbindung nach Anspruch 1 in dieses organische Material einarbeitet.

**Claims**

1. A compound of the formula

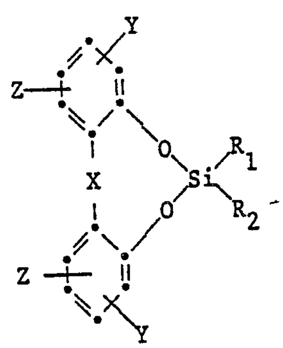

in which $R_1$ and $R_2$ independently of one another are hydrogen, $C_1$-$C_4$-alkyl or phenyl ; or $R_1$ and $R_2$ together form

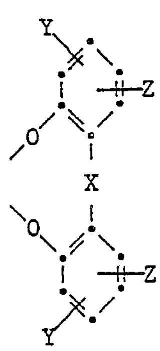

X is a direct bond, $C_1$-$C_7$ alkylidene or sulfur ;

Y is $C_4$-$C_{12}$ alkyl or $C_7$-$C_{12}$ alkaryl and

Z is hydrogen, $C_1$-$C_{12}$ alkyl or phenyl.

2. The compound according to claim 1, where in Y is in the ortho position to the silane oxygen in both of the phenyl rings.

3. The compound according to claim 2, wherein Y is $C_4$-$C_8$ alkyl.

4. The compound according to claim 3, wherein Y is tert-butyl.

5. The compound according to claim 2, wherein Z is tert-alkyl of 4 to 8 carbon atoms and is in the para position to the silane oxygen in both of the phenyl rings.

6. The compound according to claim 2, wherein X is $C_1$-$C_7$ alkylidene or sulfur.

7. The compound according to claim 6, wherein X is alkylidene of the formula

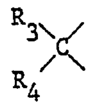

in which $R_3$ and $R_4$ independently of one another are hydrogen or $C_1$-$C_4$-alkyl, provided that the number of carbon atoms does not exceed seven.

8. A compound according to claim 2 selected from the group comprising :
2,4,8,10-Tetra-t-butyl-6-methyl-dibenzo-[d,f]-[1,3,2]-dioxasilepin,
2,4,8,10-Tetra-t-butyl-6,6-dimethyl-dibenzo-[d,f]-[1,3,2]-dioxasilepin,
2,4,8,10-Tetra-t-butyl-6-methyl-12H-dibenzo-[d,g]-[1,3,2]-dioxasilocin,
2,4,8,10-Tetra-t-butyl-6-phenyl-12H-dibenzo-[d,g]-[1,3,2]-dioxasilocin,
2,4,8,10-Tetra-t-butyl-6,6,12-trimethyl-12H-dibenzo-[d,g]-[1,3,2]-dioxasilocin,
2,4,8,10-Tetra-t-butyl-6,12-dimethyl-12H-dibenzo-[d,g]-[1,3,2]-dioxasilocin,
2,4,8,10-Tetra-t-butyl-6-methyl-dibenzo-[d,g]-[1,3,2,6]-dioxasilathiocin,
2,4,8,10-Tetra-t-butyl-6-phenyl-dibenzo-[d,g]-[1,3,2,6]-dioxasilathiocin,
2,4,8,10-Tetra-t-butyl-12H-dibenzo-[d,g]-[1,3,2]-dioxasilocin.

9. A composition of matter comprising an organic material subject to oxidative, thermal and actinic degradation and stabilized with an effective stabilizing amount of a compound according to claim 1.

10. A composition according to claim 9, wherein the organic material is a synthetic polymer.

11. A method for stabilizing an organic material against oxidative, thermal and actinic degradation which comprises incorporating into said organic metarial an effective stabilizing amount of a compound according to claim 1.

**Revendications**

1. Composé répondant à la formule :

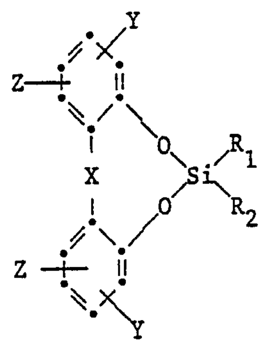

dans laquelle $R_1$ et $R_2$ représentent chacun, indépendamment l'un de l'autre, l'hydrogène, un alkyle en $C_1$-$C_4$ ou un phényle, ou encore $R_1$ et $R_2$ forment ensemble un radical :

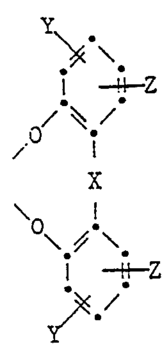

X représente une liaison directe, un alkylidène en $C_1$-$C_7$ ou le soufre,
Y représente un alkyle en $C_4$-$C_{12}$ ou un alkylaryle en $C_7$-$C_{12}$ et
Z représente l'hydrogène, un alkyle en $C_1$-$C_{12}$ ou un phényle.

2. Composé selon la revendication 1 caractérisé en ce que Y se trouve, sur chacun des deux noyaux phényles, en position ortho par rapport à l'oxygène lié au silicium.

3. Composé selon la revendication 2 caractérisé en ce que Y représente un alkyle en $C_4$-$C_8$.

4. Composé selon la revendication 3 caractérisé en ce que Y représente un radical tert-butyle.

5. Composé selon la revendication 2 caractérisé en ce que Z représente un radical tert-alkyle contenant de 4 à 8 atomes de carbone et se trouve, sur chacun des deux noyaux phényles, en position para par rapport à l'oxygène lié au silicium.

6. Composé selon la revendication 2 caractérisé en ce que X représente un radical alkylidène en $C_1$-$C_7$ ou le soufre.

7. Composé selon la revendication 6 caractérisé en ce que X représente un radical alkylidène répondant à la formule :

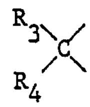

dans laquelle $R_3$ et $R_4$ représentent chacun, indépendamment l'un de l'autre, l'hydrogène ou un alkyle en $C_1$-$C_4$, avec la condition que le nombre des atomes de carbone ne dépasse pas 7.

8. Composé selon la revendication 2 pris dans l'ensemble constitué par
le tétra-tert-butyl-2,4,8,10 méthyl-6 dibenzo [d,f] [1,3,2-dioxasilépinne]
le tétra-tert-butyl-2,4,8,10 diméthyl-6,6 dibenzo [d,f] [1,3,2-dioxasilépinne]
le tétra-tert-butyl-2,4,8,10 méthyl-6 12H dibenzo [d,g] [1,3,2-dioxasilocinne]
le tétra-tert-butyl-2,4,8,10 phényl-6 12H dibenzo [d,g,] [1,3,2-dioxasilocinne]
le tétra-tert-butyl-2,4,8,10 triméthyl-6,6,12 12H dibenzo [d,g] [1,3,2-dioxasilocinne]
le tétra-tert-butyl-2,4,8,10 diméthyl-6,12 12H dibenzo [d,g] [1,3,2-dioxasilocinne]
le tétra-tert-butyl-2,4,8,10 méthyl-6 dibenzo [d,g] [1,3,2,6-dioxasilathiocinne]
le tétra-tert-butyl-2,4,8,10 phényl-6 dibenzo [d,g] [1,3,2,6-dioxasilathiocinne] et
le tétra-tert-butyl-2,4,8,10 12H-dibenzo [d,g] [1,3,2-dioxasilocinne].

9. Compositions caractérisées en ce qu'elles contiennent une matière organique susceptible d'être dégradée par l'oxydation, par la chaleur ou par un rayonnement actinique et sont stabilisées au moyen d'une quantité, efficace, en ce qui concerne la stabilisation, d'un composé selon la revendication 1.

10. Compositions selon la revendication 9 caractérisées en ce que la matière organique est un polymère synthétique.

11. Procédé pour stabiliser une matière organique contre la dégradation par l'oxydation, la chaleur ou un rayonnement actinique, procédé caractérisé en ce qu'on incorpore à cette matière organique une quantité efficace, pour ce qui est de la stabilisation, d'un composé selon la revendication 1.